# EUROPÄISCHE PATENTSCHRIFT

(11) **EP 3 802 669 B1**
(45) Veröffentlichungstag und Bekanntmachung des Hinweises auf die Patenterteilung: **26.04.2023**
(21) Anmeldenummer: 19702596.8
(22) Anmeldetag: 31.01.2019
(51) Int. Cl.: C08J 3/24, C08J 5/04

(54) **VERFAHREN ZUM VERNETZEN EINES POLYMERES UND VERNETZTES POLYMER**
PROCESS FOR CROSSLINKING A POLYMER AND CROSSLINKED POLYMER
PROCÉDÉ DE RÉTICULATION D'UN POLYMÈRE ET POLYMÈRE RÉTICULÉ

(30) Priorität: 06.06.2018 DE 102018113525
(43) Veröffentlichungstag der Anmeldung: 14.04.2021
(73) Patentinhaber: Fraunhofer-Gesellschaft zur Förderung der angewandten Forschung e.V., 80686 München (DE)
(72) Erfinder: URBANIAK, Tobias, 28359 Bremen (DE); KOSCHEK, Katharina, 28359 Bremen (DE)
(74) Vertreter: Eisenführ Speiser
(86) Internationale Anmeldenummer: PCT/EP2019/052327
(87) Internationale Veröffentlichungsnummer: WO 2019/233633

(56) Entgegenhaltungen:
- YUKI TATSUYA ET AL: "Construction of reversible crosslinking-decrosslinking system consisting of a polymer bearing vicinal tricarbonyl structure and poly(ethylene glycol)", POLYMER BULLETIN, SPRINGER, HEIDELBERG, DE, Bd. 73, Nr. 2, 25. August 2015 (2015-08-25), Seiten 345-356, XP035873445, ISSN: 0170-0839, DOI: 10.1007/S00289-015-1490-5 [gefunden am 2015-08-25]
- MORIO YONEKAWA ET AL: "Reversible crosslinking and decrosslinking of polymers containing alcohol moiety using an acyclic bifunctional vicinal triketone", JOURNAL OF POLYMER SCIENCE, PART A: POLYMER CHEMISTRY, Bd. 52, Nr. 7, 22. Januar 2014 (2014-01-22), Seiten 921-928, XP055580297, US ISSN: 0887-624X, DOI: 10.1002/pola.27087
- ANASTASSIJA WITTMER ET AL: "Moisture-mediated intrinsic self-healing of modified polyurethane urea polymers", JOURNAL OF POLYMER SCIENCE, PART A: POLYMER CHEMISTRY, Bd. 56, Nr. 5, 7. Dezember 2017 (2017-12-07), Seiten 537-548, XP055579124, US ISSN: 0887-624X, DOI: 10.1002/pola.28925

## Beschreibung

Die Erfindung betrifft ein Verfahren zum Vernetzen eines Monomeres, Oligomeres (oder Polymeres) mit wenigstens zwei Hydroxylgruppen mittels eines Vernetzers, der wenigstens zwei Tricarbonyl- oder zwei Trithiocarbonyldomänen umfasst. Dabei muss für eine Vernetzung (i) das Polymer, Monomer oder Oligomer oder (ii) der Vernetzer über wenigstens drei der oben genannten Gruppen oder Domänen verfügen.

Sie betrifft ferner ein Verfahren zur Herstellen eines Faserverbundstoffes sowie ein vernetztes Polymer, Monomer oder Oligomer, hergestellt oder herstellbar mittels des erfindungsgemäßen Verfahrens zur Herstellung eines vernetzten Polymeres und einen Faserverbundwerkstoff, hergestellt oder herstellbar mittels des erfindungsgemäßen Verfahrens zur Herstellung des Faserverbundwerkstoffes. Außerdem betrifft die Erfindung die Verwendung eines erfindungsgemäßen vernetzten Polymeres, Monomeres oder Oligomeres als recycelbare Matrix für einen Faserverbundwerkstoff, als recycelbares Polymer, als Klebstoff oder als selbstheilendes Polymer.

### Stand der Technik

Es besteht ein konstanter Bedarf an Polymermaterialien mit speziellen Eigenschaften. So sind für viele Anwendungsgebiete selbstheilende, dynamisch vernetzte Polymere, die auch nach dem Aushärten im Sinne einer Vernetzungsreaktion nachträglich verformbar sind und idealerweise auch einem sicheren Recyclingverfahren zugänglich sind, gefragt. Solche Polymere sind für eine Vielzahl von Anwendungszwecken geeignet, ein besonders bevorzugter Anwendungsbereich sind faserverstärkte Kunststoffe.

Im Folgenden werden die wichtigsten selbstheilenden, nachträglich verformbaren und/oder recycelbaren Faserverbundkunststoffe kurz zusammengefasst:
- Selbstheilung von vernetzten Faserverbundkunststoffen: Bei dieser Ausgestaltung findet sich beispielsweise ein Reagens zur Selbstheilung in den Hohlfasern des Faserverbundwerkstoffes. Bei einem Faserbruch tritt das Reagens aus und kann eine erneute Vernetzungsreaktion auslösen. Ein entsprechender Ansatz ist in der WO 2004/007608 A2 offenbart.
- Formgebung von thermoplastischen Faserverbundkunststoffen: Solche Faserverbundstoffe sind durch Temperaturbeaufschlagung verformbar. In Lösungsmitteln kann die Polymermatrix aufgelöst und so von der Faser getrennt werden. Somit ist die Matrix recycelbar. Der eingesetzte Faserverbundkunststoff besitzt die typischen Nachteile von Thermoplasten wie zum Beispiel begrenzte thermische Dimensionsstabilität. Ein entsprechender Ansatz ist offenbart in der DE 4112172 A1.
- Recycling von vernetzten Faserverbundkunststoffen: In glas- und kohlefaserverstärkten Kunststoffen wird die Polymermatrix durch Verbrennung oder Pyrolyse zerstört, sodass die Fasern wiedergewonnen und wiederverwendet werden können. Dies ist selbstverständlich nicht anwendbar für eine Reihe von Naturfasern, und bei diesem Prozess findet immer ein Qualitätsverlust statt, da die mechanischen Eigenschaften der recycelten Fasern, insbesondere, wenn es sich um Kohlenstofffasern handelt, mit jedem Recyclingzyklus gegenüber den mechanischen Eigenschaften von Neufasern verlieren. Entsprechende Faserverbundstoffe können durch dynamische Netzwerke einer auf Disulfid-Bindung basierenden Matrix verformt, geheilt und durch ein chemisches Reagens recycelt werden. Vergleiche hierzu zum Beispiel A. Ruiz de Luzuriaga, R. Martin, N. Markaide, A. Rekondo, G. Cabañero, J. Rodriguez and I. Odriozola, Mater. Horiz., 2016, 3, 241-247.

Vor dem Hintergrund des ständigen Bedarfes neuer entsprechender Polymermaterialien, insbesondere solcher für Faserverbundwerkstoffe, war es Aufgabe der vorliegenden Erfindung, ein Verfahren zum Herstellen eines Polymeres mit selbstheilenden Eigenschaften anzugeben, das verhältnismäßig leicht durchführbar ist und wodurch Polymere mit besonderen Eigenschaften zugänglich werden.

### Erfindungsgemäß gelöst wird diese Aufgabe durch ein Verfahren zum Vernetzen eines

Polymeres, Monomeres oder Oligomeres, umfassend die Schritte:
a) Bereitstellen eines Polymeres, Monomeres oder Oligomeres mit wenigstens zwei Hydroxygruppen,
b) Bereitstellen eines Vernetzers mit wenigstens zwei Tricarbonyl- oder zwei Trithiocarbonyldomänen und
c) Vernetzen des Polymeres, Monomeres oder Oligomeres mit dem Vernetzer ohne Zugabe eines Lösungsmittels,

wobei wenigstens (i) das Polymer, Monomer oder Oligomer oder (ii) der Vernetzer über wenigstens drei der genannten Gruppen oder Domänen verfügen,
wobei das Vernetzen so erfolgt, dass das resultierende vernetzte Polymer, Monomer oder Oligomer bei Atmosphärendruck temperaturunabhängig über ein größeres Speichermodul als Verlustmodul (bevorzugt zumindest im energieelastischen und entropieelastischen Zustandsbereich) verfügt, gemessen mittels Thermischer Analyse nach DIN EN ISO 6721-1 und DIN 65583.

Ein Monomer im Sinne des vorliegenden Textes ist ein Molekül, dass sich als repetitive Einheit für ein Polymer eignet.

Ein Oligomer im Sinne des vorliegenden Textes ist ein Molekül, dass wenigstens zwei Monomere umfasst und ein Molgewicht von ≤ 10.000 g/mol besitzt.

Ein Polymer im Sinne dieses Textes ist ein Molekül, das wenigstens 2 Monomere umfasst (bevorzugt wenigstens 10, weiter bevorzugt wenigstens 20, wobei die Monomere selbstverständlich im Form repetitiven Einheiten in das Molekül eingebaut sind) und ein Molekulargewicht von > 10.000 g/mol besitzt.

Eine Tricarbonyl- bzw. eine Trithiocarbonyldomäne im Sinne des vorliegenden Textes ist ein Abschnitt auf einem Molekül, bei dem an drei benachbarten Kohlenstoffatomen jeweils eine Carbonyl- bzw. jeweils eine Thiocarbonylfunktion (ein entsprechender Rest) vorhanden ist.

Für den Fachmann ist es nachvollziehbar, dass eine tatsächliche Vernetzung nur dann stattfinden kann, wenn wenigstens einer der beiden Reaktionspartner über drei reaktionsfähige Gruppen oder Domänen für die Vernetzungsreaktion verfügt, da anderenfalls allenfalls lineare Kettenverlängerungen entstehen könnten. Dadurch, dass im erfindungsgemäßen Verfahren eine dreidimensionale Vernetzung stattfindet, ist es möglich, vernetzte Polymere herzustellen, die in ihren Eigenschaften sich an Duromere annähern.

Überraschenderweise hat sich herausgestellt, dass das erfindungsgemäße Verfahren ohne eine Zugabe eines Lösungsmittels stattfinden kann. Im erfindungsgemäßen Verfahren bedeutet "ohne Zugabe eines Lösungsmittels" nicht, dass überhaupt kein Lösungsmittel vorhanden sein darf, obwohl dies bevorzugt ist, sondern dass die Mengen an Lösungsmittel so gering sind, dass sie keinen wesentlichen Teil eines der beiden Reaktionspartner, die in den Schritten a) und b) bereitgestellt werden, lösen. Nicht unter den Ausschluss des Lösungsmittels fällt - für den Fachmann selbstverständlich - die Situation, wobei einer der unter Schritt a) oder b) bereitgestellten Reaktionspartner als Lösungsmittel für den anderen fungiert.

Es hat sich außerdem überraschenderweise herausgestellt, dass es möglich ist, das Vernetzen im erfindungsgemäßen Verfahren so durchzuführen, dass bei Atmosphärendruck unabhängig von der Temperatur für das entstehende Polymer ein größeres Speichermodul als Verlustmodul insbesondere im energieelastischen und entropieelastischen Zustandsbereich (gemessen mittels thermischer Analyse nach DIN EN ISO 6721-1 und DIN 65583) verfügt. Dies ist im Regelfall dadurch zu erreichen, dass die Reaktanten einer verhältnismäßig langen Wärmezufuhr ausgesetzt werden. Man wird in diesem Zusammenhang die Reaktionstemperaturen und die Dauer der jeweiligen Reaktion unter gegebenen Reaktionstemperaturbedingungen an die eingesetzten Edukte anpassen. Selbstverständlich steht dem Fachmann auch die Möglichkeit zur Verfügung, die Druckverhältnisse anzupassen, insbesondere den Druck während der Reaktion zu erhöhen.

Überraschend ist in diesem Zusammenhang, dass durch das entsprechende erfindungsgemäße Verfahren das vernetzte Polymer gegen organische Lösungsmittel und Wasser (zum Beispiel bei Auslagerung in Wasser bei 100 °C für 24 Stunden) bei Normaldruck beständig ist.

Bevorzugt ist ein erfindungsgemäßes Verfahren, wo das bereitgestellte Polymer ausgewählt ist aus der Gruppe bestehend aus Polymeren basierend auf Bisphenol A, Bisphenol F, Benzoxazinen, Polyethern, Polyharnstoffen, Polyamiden und Polyestern oder das bereitgestellte Monomer oder Oligomer ein solches ist, aus dem oder mit dem eines der bevorzugt bereitgestellten Polymere gebildet werden kann.

Insbesondere bevorzugt ist in diesem Zusammenhang, dass das Polymer ein Polycaprolacton oder ein Polylactid ist, wobei das Polycaprolacton ganz besonders bevorzugt ist.

Diesen Polymeren, die natürlich jeweils im Sinne des erfindungsgemäßen Verfahrens über mindestens zwei (zugängliche) Hydroxygruppen verfügen müssen, ist das erfindungsgemäße Verfahren besonders erfolgreich durchführbar. Insbesondere ist es verhältnismäßig einfach, die erfindungsgemäß geforderten Eigenschaften hinsichtlich des Speichermoduls und des Verlustmoduls zu erreichen.

Bevorzugt ist ein erfindungsgemäßes Verfahren, wobei der Vernetzer ein Molekül der Formel I ist, 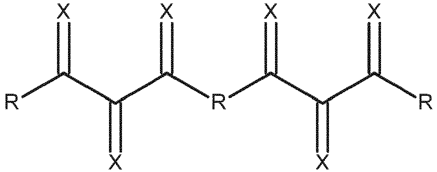 wobei
jedes X unabhängig von den anderen S oder O bedeutetet und
jedes R unabhängig von den anderen einen gegebenenfalls substituierten aromatischen, linearen oder verzweigten gesättigten oder ungesättigten Kohlenstoffrest mit einer molaren Masse von 14 g/mol bis 25.000 g/mol, bevorzugt 60 g/mol bis 10.000 g/mol bedeutet, wobei eine bevorzugte Substitution jeweils unabhängig von den anderen eine weitere Tricarbonyl- oder Trithiocarbonyldomäne ist, wobei ganz besonders bevorzugt der Vernetzer 3,3-(1,4-Phenylen)bis(1-phenylpropan-1,2,3-trion) oder auch Polyvinylderivate mit Tricarbonyl Domänen

Bevorzugt ist ein erfindungsgemäßes Verfahren, wobei das bereitgestellte Polymer und der Vernetzter im Verhältnis der Hydroxygruppen des Polymers zu den Tricarbonyl- und Trithiocarbonyldomänen des Vernetzers im molaren Verhältnis von 0,5 - 5, bevorzugt 0,6 - 2,5 und besonders bevorzugt 0,8 - 1,2 bereitgestellt werden.

Mit diesen Verhältnissen der reaktiven Gruppen zueinander lässt sich das erfindungsgemäße Verfahren besonders gut durchführen.

Grundsätzlich basiert die Vernetzung - zumindest in einer ersten Stufe - auf einer Keton- /(Hemi)Ketal-Reaktion. Ein nur der ersten "Stufe" unterworfenes Polymer im Sinne der Erfindung würde aber nicht über den gesamten Temperaturbereich (bevorzugt wenigstens von -100°C - 175°C) über ein höheres Speichermodul als Verlustmodul verfügen. Bevorzugt wird die zweite Stufe ("Umlagerung") der Reaktion durch Tempern, also halten bei einer erhöhten Temperatur, erzielt, bis das erfindungsgemäße Verhältnis von Speicher- und Verlustmodul erreicht ist. Dies soll am Beispiel von Poly(Caprolacton) (PCL) und einer Tricarbonylverbindung als Vernetzer genauer beschrieben werden: Bei dem erfindungsgemäßen Verfahren reagieren die OH-Gruppen des Polyesters (PCL) mit dem Keton der Tricarbonylverbindung zum vernetzten Polymer (Hemiketal-Bildung). Sofern die Reaktion nicht weit genug geführt wird, also insbesondere nicht so weit geführt wird, dass das resultierende vernetzte Polymer bei Atmosphärendruck temperaturunabhängig über ein größeres Speichermodul als Verlustmodul insbesondere im energieelastischen und entropieelastischen Zustandsbereich verfügt, findet in Anwesenheit von Wasser eine Konkurrenzreaktion mit den OH-Endgruppen des PCLs statt und die Vernetzungsstellen des PCL-Netzwerks werden in diesem Fall gelöst. Zwar kann das daraus resultierende Hydrat durch erneute Trocknung (Entfernung von Wasser) wieder zum vernetzten Polymer reagieren, das Lösen und Wiederherstellen von Vernetzungsstellen bei lediglich der Anwesenheit von Feuchtigkeit ist aber in vielen Anwendungen nicht gewünscht. Zwar ist grundsätzlich bei einer (möglichen) Keton-/(Hemi)Ketal-Reaktion in Anwesenheit von Wasser ein Recycling verhältnismäßig einfach durchführbar, es muss aber für viele Anwendungen natürlich ein Kompromiss zwischen Recycelbarkeit und Haltbarkeit der Polymerform gefunden werden.

Vorteilhaft an dem erfindungsgemäßen Verfahren ist auch, dass der Einsatz von Lösungsmitteln nicht notwendig ist. Dies lässt letztendlich eine wirtschaftlich günstige Verfahrensführung zu und insbesondere vor dem Hintergrund, dass eine Vielzahl von Lösungsmitteln auch gesundheitlich bedenklich ist, ist es natürlich wünschenswert, auf den Zusatz entsprechender Chemikalien zu verzichten. Dies kann im Falle von PCL zum Beispiel dadurch bewirkt werden, dass das Vernetzermolekül und der Polyester homogenisiert wird und pastenartig vorliegt. Zum Beispiel ist es möglich, dieses Polymer im Pressverfahren bei Raumtemperatur einzusetzen. Das homogenisierte Polymer kann für 5 Minuten bei 130 °C aufgeschmolzen werden. Nach dem Abkühlen entsteht dann ein vernetztes Polymer, das in Abhängigkeit von der Temperatur auf verschiedene Arten verarbeitet werden kann. So zum Beispiel sind infusionsbasierte Verfahren zur Formgebung des Polymers möglich, wenn Temperaturen über 100 °C eingesetzt werden, sodass das Polymer flüssig vorliegt.

Die im ersten Schritt vernetzte Matrix kann in Trockenlösungsmitteln gequollen und auch in Lösungsmitteln mit Wasser aufgelöst werden. Wie vorab beschrieben ist es aber wünschenswert, die mechanischen Eigenschaften so zu verbessern, dass dieser Vorgang nicht mehr (ohne weitere Maßnahmen) eintreten kann. Vor diesem Hintergrund ist es notwendig, dass das Vernetzen entweder unmittelbar oder in einem zweiten Schritt so geführt wird, dass das entstehende vernetzte Polymer über ein größeres Speichermodul als Verlustmodul insbesondere im energieelastischen und entropieelastischen Zustandsbereich unabhängig von der Temperatur verfügt.

Ein bevorzugtes erfindungsgemäßes Verfahren ist ein Verfahren zur Herstellung eines Faserverbundstoffes, umfassend sämtliche Schritte des erfindungsgemäßen Verfahrens, insbesondere eines der bevorzugten erfindungsgemäßen Verfahrens, wobei vor Schritt c), also dem Vernetzen des Polymers, Fasern bereitgestellt werden und diese mit den in Schritt a) und b) des erfindungsgemäßen Verfahren bereitgestellten Materialien vermischt, imprägniert, infiltriert oder getränkt werden.

Bevorzugte Fasern für das bevorzugte erfindungsgemäße Verfahren zur Herstellung eines Faserverbundstoffes sind ausgebildet aus der Gruppe bestehend aus Glasfasern, Kohlenstofffasern, Naturfasern (insbesondere Bastfasern), Mineralfasern (insbesondere Basaltfahren) und Kunststofffasern (insbesondere Aramidfasern). Bevorzugt ist es, dass die Fasern in Form von endlosfaserverstärkten Verbunden eingesetzt werden.Durch das bevorzugte erfindungsgemäße Verfahren (zur Herstellung eines Faserverbundwerkstoffes) ist es möglich, Faserverbundwerkstoffe bereitzustellen, die überraschend beständig gegen organische Lösungsmittel und Wasser sind, die trotzdem über gewisse Selbstheilungseigenschaften (aufgrund der Polymermatrix) verfügen und für die ein geeignetes Recyclingverfahren (siehe unten) zur Verfügung steht.

Dementsprechend ist auch Teil der Erfindung ein vernetztes Polymer, hergestellt oder herstellbar mittels eines erfindungsgemäßen Verfahrens zur Herstellung eines vernetzten Polymers.

Ebenso ist Teil der Erfindung ein Faserverbundwerkstoff, hergestellt oder herstellbar mittels eines erfindungsgemäßen Verfahrens zur Herstellung eines Faserverbundwerkstoffes.

Diese Materialien, also das vernetzte Polymer für eine Vielzahl von Einsatzmöglichkeiten, insbesondere aber auch als Matrixmaterial für einen Faserverbundwerkstoff sowie der Faserverbundwerkstoff selbst verfügen über die oben geschriebenen bevorzugten Materialeigenschaften, insbesondere eine gewisse Selbstheilung, den Zugang zu einem geeigneten Recyclingverfahren sowie eine Beständigkeit gegen organische Lösungsmittel und Wasser.

Teil der Erfindung ist auch die Verwendung eines erfindungsgemäßen vernetzten Polymers als recyclebare Matrix für ein Faserverbundwerkstoff, insbesondere für einen erfindungsgemäßen Faserverbundwerkstoff oder als recyclebares Polymer oder als Klebstoff oder als selbstheilendes Polymer.

Diese Verwendung entsprechen in besonderem Maße dem Eigenschaftsprofil des erfindungsgemäßen Verfahrens herstellbaren vernetzen Polymers.

Eine "Matrix" für einen Faserverbundwerkstoff ist dabei das Polymermaterial, das zwischen den Fasern und ggf. auch in Faserhohlräumen, also in den Fasern selbst, im Faserverbundwerkstoff vorhanden ist.

Das erfindungsgemäße Polymermaterial kann unter geeigneten Bedingungen, insbesondere bei Hitze und Druck (abhängig vom eigentlichen Material) verformt werden. Dabei findet eine Umlagerungsreaktion (z. B. eine dynamische Keton-/(Hemi)Ketal-Reaktion) statt. Ebenso ist es möglich, unter den entsprechenden Temperaturbedingungen, Beschädigungen in der Polymermatrix oder im Polymermaterial zu "heilen". Auch hier wird der Fachmann die Bedingungen (insbesondere Temperatur und Druck und optional Feuchte) an die jeweilig eingesetzten Materialien anpassen.

Die zu "heilenden" Polymere werden in eine Heizpresse gelegt und auf 130 °C oberhalb der *T*_{g} erwärmt und bei gegenüber Atmosphärendruck erhöhtem Druck (z. B. 0,4 MPa) gehalten um die Umlagerungsreaktion zu beschleunigen.

Das vernetzte Polymermaterial ist bei der erfindungsgemäßen Verfahrensführung nicht - aufschmelzbar und unlöslich in wässrigen und organischen Lösungsmitteln. Es ist außerdem beständig gegen eine Vielzahl von Nukleophilen.

Trotzdem ist ein Recycling möglich: Auch hier wieder abhängig von den tatsächlich eingesetzten Materialien wird der Fachmann die entsprechenden Bedingungen einstellen. Grundsätzlich ist ein Recycling im Autoklaven möglich. So ist es zum Beispiel für bevorzugte eingesetzte Materialien möglich im Autoklaven bei einer Temperatur von 140°C, einem Druck von 2,7 bar und unter gesättigtem Wasserdampf über zwei Stunden das erfindungsgemäße Polymer wieder vollständig zu verflüssigen.

Auch Faserverbundwerkstoffe (FVK) sind auf dieser Art recyclebar. Unter gespannter feuchter Hitze zum Beispiel im Autoklaven ist es möglich, die Matrix vollständig zu verflüssigen und somit von den Fasern zu trennen. Die Matrix ist komplett wiederverwendbar, ohne dass nach einer Trocknung Einbußen hinsichtlich des Eigenschaftsprofils für das dann wiederum vernetzte Polymer festzustellen sind. Mit anderen Worten, die erfindungsgemäßen Materialien, insbesondere das erfindungsgemäß vernetzte Polymer lässt sich über mehrere Recyclingzyklen ohne wesentliche Qualitätseinbußen wiedergewinnen und wieder einsetzen. Dies gilt auch für die Fasern.

### Beispiele

### Beispiel 1

0.126 g Capa^{™} 4101 von Perstorp ((1000g/mol) Poly-ε-Caprolacton mit dem Startalkohol 2,2 bis(hydroxymethyl)-1,3-propandiol) und 0.100 g 3,3-(1,4-Phenylen)bis(1-phenylpro-pan-1,2,3-trion) werden in einen Mörser vorgelegt und homogenisiert. Die homogene Paste wurde bei 130 °C aufgeschmolzen und 3 h bei 130°C gehalten. Nach einem Abkühlprozess auf 25°C (10 °C/min) wurde ein orange/gelbes vernetztes Polymer erhalten. Das vernetzte Polymer hat einen *T*_{g} von +10 °C und ein Speichermodul von 2254 MPa und ein Verlustmodul von 59 MPa bei -80 °C, bei 179 °C ist das Speichermodul 2.0 MPa und das Verlustmodul 0.06 MPa. Das Polymer hat einen Massenverlust von 1% bei 189°C, von 10% bei 358°C und das Maximum (TGA- 1. Ableitung) bei 409°C.

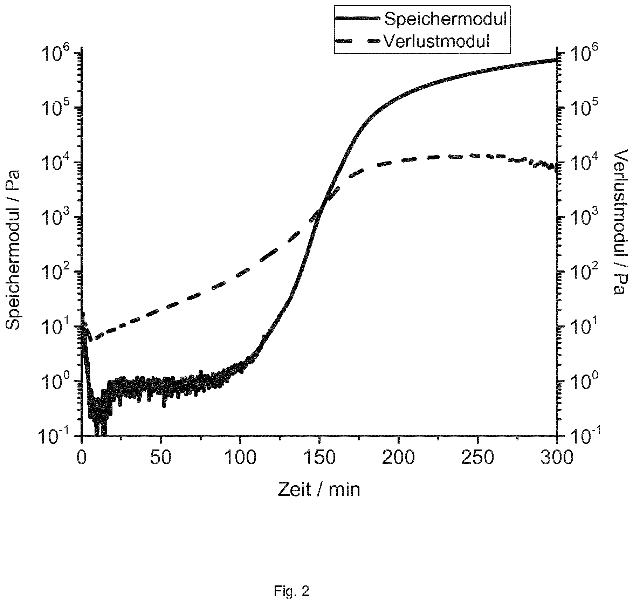

Die Figur 2 zeigt den Vernetzungsvorgang anhand des Beispiels 1. Isothermer (130°C) Reaktionsverlauf von 0 bis 300 min. Speichermodul steigt über die Zeit stärker an als das Verlustmodul. Bei 150 min kreuzen sich Speicher und Verlustmodul welches eine Vernetzung des Polymers darstellt.

### Beispiel 2

12.3 g Capa^{™} 4101 von Perstorp ((1000g/mol) Poly-ε-Caprolacton mit dem Startalkohol 2,2 bis(hydroxymethyl)-1,3-propandiol) und 10.0 g 3,3-(1,4-Phenylen)bis(1-phenylpropan-1,2,3-trion) werden in einen Mörser vorgelegt und homogenisiert. Das homogenisierte Polymer wurde auf die 6 Lagen Glasfasergelege (10x15 cm) gleichmäßig verteilt und übereinander gelegt. Der Verbund wurde für 5 min bei 130°C im Umluftofen bei Atmosphärendruck erwärmt, um die Polymermischung aufzuschmelzen und die Fasern zu tränken.

Anschließend wurde der Verbund mit Abstandshaltern (1.5 mm) in eine Heizpresse (Schmodt MB 20 400 VC) gelegt und bei 130 °C, 20 min bei Atmosphärendruck gehalten. Die Presse wurde nach den 20min mit einem Druck von 10kN und einer Temperatur von 130°C zusammengefahren und für 4 h gehalten. Der angelegte Druck auf dem Verbund sind ca. 0,4 MPa (4 facher Atmosphärendruck). Nach den 4h wurde der Druck von dem Verbund entfernt und der Verbund auf 25°C (2°C/min) abgekühlt. Die Probekörper für die 3-Punktbiegung wurden mit einem Cuttermesser herausgeschnitten.

Im Faserverbund mit 6 Lagen Glasfasergelege (Köperbindung Gewebe, 2/2, 280g/m²; P-D Interglas Technologies GmbH, Erbach, DE) bleibt der *T*_{g} bei +10°C und das Speicher / Verlustmodul erhöhen sich auf 17379 MPa bzw. 192 MPa bei -80 °C, bei 179 °C ist das Speichermodul 215 MPa und das Verlustmodul 19 MPa.

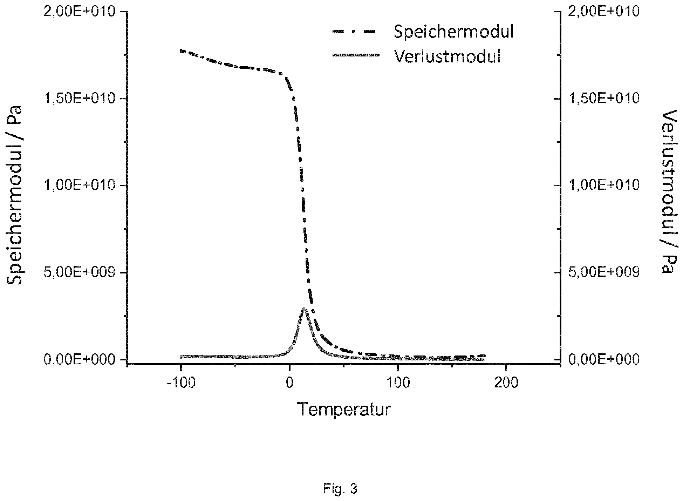

Figur 3 zeigt die DMA Messung vom Faserverbund aus Beispiel 2 von -100 °C bis 180°C.

### Beispiel 3

Die vernetzten Faser-verstärkten Proben aus Beispiel 2 wurden in einem 3-Punkt Biegeversuch beschädigt. Durch Auslagerung für drei Stunden bei 130 °C und einem Druck 0,4 MPa findet die Umlagerungsreaktion statt. Die Selbstheilungseigenschaften des Polymers führen zur Reparatur des Faserverbundwerkstoffs. Des Weiteren können die FVK Proben auch unter Temperatur und Druck auch nach dem Vernetzungsprozess verformt werden.

Die FVK Proben aus Beispiel 2 zeigten nach zwei Zyklen der Beschädigung und Reparatur die gleichen Biegemodule wie nach dem ersten Versuch.

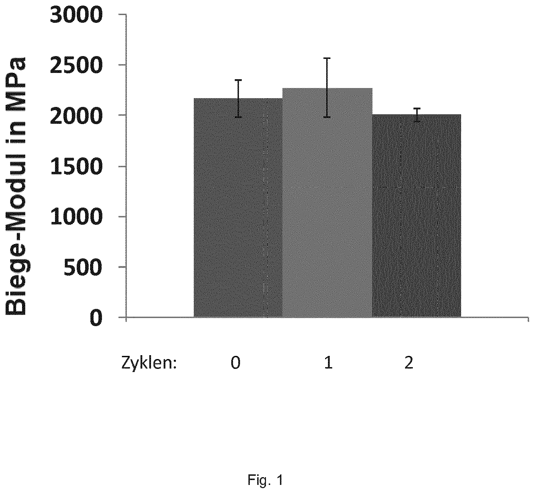

Fig. 1: Biegeversuch an Proben aus Beispiel 2 mit selbstheilender Matrix. Mindestens 5 Proben wurden getestet.0 ist das Biegemodul der frischen noch nicht getesteten Probe. 1 und 2 jeweils die Proben nach der Selbstheilung und (weiter) Beschädigung Die Proben haben nach 2 Zyklen (Beschädigung/Heilung) keine Abnahme des Biegemoduls gezeigt.

### Beispiel 4

### Ansatz zum Recyling der Fasern und der Polymermatrix

Die FVK aus Beispiel 2 sind nach enstprechender Temperung (130 °C und Druck) nicht mehr aufschmezbar und unlöslich in wässrigen und organischen Lösungsmitteln. Das Recycling eines solchen Verbundes gelingt, wenn zum Lösen der Vernetzungspunkte die Materialien im Autoklaven unter Temperatur (140 °C) Druck (2,7bar) und Wasserdampf über 2h gelagert werden. Alle drei Bedingungen (T, p,HzO) müssen gegeben sein, um das Lösen der Bindungen und damit das Auflösen der Polymervernetzung zu erreichen.

Die Matrix konnte vollständig von den Fasern getrennt werden, die bei dem Prozessschritt nicht beschädigt wurden. Nach der Behandlung war das Polymer flüssig und die Vernetzung konnte durch eine Trocknung im Vakuum wiederhergestellt werden.

### Beispiel 5

### Debonding on demand bei verklebten Bauteilen

Durch einwirken von Wasserdampf unter Druck kann nicht nur die Polymermatrix von den Fasern getrennt, sondern auch gefügte Bauteile gezielt voneinander gelöst werden. So wurden zwei mit dem vernetzten Polymer aus Beispiel 1 verklebte Bauteile unter den Recyclingbedingungen aus Beispiel 5 leicht wieder voneinander getrennt.

## Patentansprüche

1. Verfahren zum Vernetzen eines Polymeres, Monomeres oder Oligomeres, umfassend die Schritte:
a) Bereitstellen eines Polymeres, Monomeres oder Oligomeres mit wenigstens zwei Hydroxygruppen,
b) Bereitstellen eines Vernetzers mit wenigstens zwei Tricarbonyl- oder zwei Trithiocarbonyldomänen und
c) Vernetzen des Polymeres, Monomeres oder Oligomeres mit dem Vernetzer ohne Zugabe eines Lösungsmittels,
wobei wenigstens (i) das Polymer, Monomer oder Oligomer oder (ii) der Vernetzer über wenigstens drei der genannten Gruppen oder Domänen verfügen,
wobei das Vernetzen so erfolgt, dass das resultierende vernetzte Polymer, Monomer oder Oligomer bei Atmosphärendruck temperaturunabhängig über ein größeres Speichermodul als Verlustmodul verfügt, gemessen mittels Thermischer Analyse nach DIN EN ISO 6721-1 und DIN 65583.

2. Verfahren nach Anspruch 1, wobei das bereitgestellte Polymer ausgewählt ist aus der Gruppe bestehend aus Polymeren basierend auf Bisphenol A, Bisphenol F, Benzoxazinen, Polyethern, Polyharnstoffen, Polyamiden und Polyestern.

3. Verfahren nach Anspruch 1 oder 2, wobei das bereitgestellte Polymer ein Polycaprolacton oder ein Polylactid ist.

4. Verfahren nach einem der vorangehenden Ansprüchen, wobei der Vernetzer ein Molekül der Formel (I) ist: 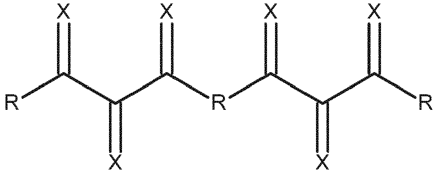 wobei
jedes X unabhängig von den anderen S oder O bedeutetet und
jedes R unabhängig von den anderen einen gegebenenfalls substituierten aromatischen, linearen oder verzweigten gesättigten oder ungesättigten Kohlenstoffrest mit einer molaren Masse von 14 g/mol bis 25.000 g/mol bedeutet, wobei eine bevorzugte Substitution jeweils unabhängig von den anderen eine weitere Tricarbonyl- oder Trithiocarbonyldomäne ist.

5. Verfahren nach einem der vorangehenden Ansprüche, wobei der Vernetzter ausgewählt ist aus der Gruppe bestehend aus 3,3-(1 ,4-Phenylen)bis(1-phenylpropan-1 ,2,3-trion) und Polyvinylderivaten mit Tricarbonyl-Domänen

6. Verfahren nach einem der vorangehenden Ansprüche, wobei das bereitgestellte Polymer und der Vernetzter im Verhältnis der Hydroxygruppen des Polymers zu den Tricarbonyl- und Trithiocarbonyldomänen des Vernetzers im molaren Verhältnis von 0,5 - 5 bereitgestellt werden.

7. Verfahren zur Herstellung eines Faserverbundwerkstoffes umfassend die Schritte a.) bis c) eines Verfahrens nach einem der vorangehenden Ansprüche, wobei vor Schritt c) Fasern bereitgestellt werden und diese mit den in Schritt a) und b) bereitgestellten Materialien vermischt, imprägniert, infiltriert oder getränkt werden.

8. Vernetztes Polymer, Monomer oder Oligomer, hergestellt oder herstellbar mit einem Verfahren nach einem der Ansprüche 1 bis 6.

9. Faserverbundwerkstoff, hergestellt oder herstellbar mit einem Verfahren nach Anspruch 7.

10. Verwendung eines vernetzten Polymeres, Monomeres oder Oligomeres nach Anspruch 8 als recycelbare Matrix für einen Faserverbundwerkstoff nach Anspruch 9 oder als recyclebares Polymer, Monomer oder Oligomer oder als Klebstoff oder als selbstheilendes Polymer.

## Claims

1. Process for crosslinking a polymer, monomer or oligomer, comprising the steps of:
a) providing a polymer, monomer or oligomer having at least two hydroxyl groups,
b) providing a crosslinker having at least two tricarbonyl or two trithiocarbonyl domains, and
c) crosslinking the polymer, monomer or oligomer with the crosslinker without adding a solvent,
wherein at least (i) the polymer, monomer or oligomer or (ii) the crosslinker possess at least three of the stated groups or domains,
wherein the crosslinking takes place such that the resultant crosslinked polymer, monomer or oligomer at atmospheric pressure independently of temperature possesses a larger storage modulus than loss modulus, measured via thermal analysis according to DIN EN ISO 6721-1 and DIN 65583.

2. Process according to Claim 1, wherein the provided polymer is selected from the group consisting of polymers based on bisphenol A, bisphenol F, benzoxazines, polyethers, polyureas, polyamides and polyesters.

3. Process according to Claim 1 or 2, wherein the provided polymer is a polycaprolactone or a polylactide.

4. Process according to any of the preceding claims, wherein the crosslinker is a molecule of the formula (I): 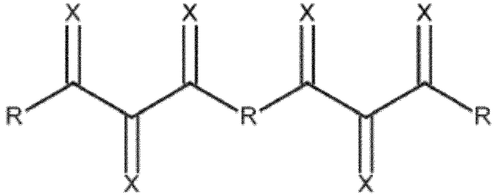 wherein
each X independently of the others is S or O and
each R independently of the others is an optionally substituted aromatic, linear or branched saturated or unsaturated carbon radical having a molar mass of 14 g/mol to 25,000 g/mol, wherein a preferred substitution in each case independently of the others is a further tricarbonyl or trithiocarbonyl domain.

5. Process according to any of the preceding claims, wherein the crosslinker is selected from the group consisting of 3,3-(1,4-phenylene)bis(1-phenylpropan-1,2,3-trione) and polyvinyl derivatives having tricarbonyl domains.

6. Process according to any of the preceding claims, wherein the provided polymer and the crosslinker are provided, in the ratio of the hydroxyl groups of the polymer to the tricarbonyl and trithiocarbonyl domains of the crosslinker, in a molar ratio of 0.5-5.

7. Process for producing a fibre composite material comprising steps a) to c) of a process according to any of the preceding claims, wherein before step c) fibres are provided and are mixed, impregnated, infiltrated or soaked with the materials provided in steps a) and b).

8. Crosslinked polymer, monomer or oligomer prepared or preparable with a process according to any of Claims 1 to 6.

9. Fibre composite material produced or producible with a process according to Claim 7.

10. Use of a crosslinked polymer, monomer or oligomer according to Claim 8 as a recyclable matrix for a fibre composite material according to Claim 9 or as a recyclable polymer, monomer or oligomer or as an adhesive or as self-healing polymer.

## Revendications

1. Procédé de réticulation d'un polymère, d'un monomère ou d'un oligomère, comprenant les étapes :
a) de fourniture d'un polymère, d'un monomère ou d'un oligomère avec au moins deux groupes hydroxyle,
b) de fourniture d'un agent de réticulation avec au moins deux domaines tricarbonyle ou deux domaines trithiocarbonyle, et
c) de réticulation du polymère, du monomère ou de l'oligomère avec l'agent de réticulation sans ajout d'un solvant,
dans lequel au moins (i) le polymère, le monomère ou l'oligomère ou (ii) l'agent de réticulation disposent d'au moins trois desdits groupes ou domaines,
dans lequel la réticulation est effectuée de telle sorte que le polymère, le monomère ou l'oligomère réticulé en résultant dispose, en présence de la pression atmosphérique, en fonction de la température, d'un module de mémorisation plus important que le module de perte, mesuré au moyen d'une analyse thermique selon la norme DIN EN ISO 6721-1 et la norme DIN 65583.

2. Procédé selon la revendication 1, dans lequel le polymère fourni est choisi parmi le groupe constitué de polymères à base de bisphénol A, de bisphénol F, de benzoxazines, de polyéthers, de polyurées, de polyamides et de polyesters.

3. Procédé selon la revendication 1 ou 2, dans lequel le polymère fourni est une polycaprolactone ou un polylactide.

4. Procédé selon l'une quelconque des revendications précédentes, dans lequel l'agent de réticulation est une molécule de la formule (I) : 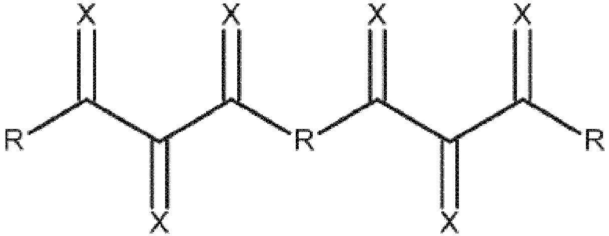 dans lequel
chaque X signifie indépendamment les uns des autres S ou O, et
chaque R signifie indépendamment les uns des autres un radical de carbone saturé ou insaturé, linéaire ou ramifié, éventuellement aromatique substitué avec une masse molaire de 14 g/mol à 25 000 g/mol, dans lequel une substitution de prédilection est respectivement indépendamment les unes des autres un autre domaine tricarbonyle ou un domaine trithiocarbonyle.

5. Procédé selon l'une quelconque des revendications précédentes, dans lequel l'agent de réticulation est choisi parmi le groupe constitué de 3,3-(1,4-phénylène)bis-1-phénylpropane-1,2,3-trion) et de dérivés de polyvinyle avec des domaines tricarbonyle.

6. Procédé selon l'une quelconque des revendications précédentes, dans lequel le polymère fourni et l'agent de réticulation sont fournis selon le rapport entre les groupes hydroxyle du polymère et les domaines de tricarbonyle et de trithiocarbonyle de l'agent de réticulation dans le rapport molaire de 0,5 - 5.

7. Procédé de fabrication d'un matériau composite à base de fibres comprenant les étapes a.) à c.) d'un procédé selon l'une quelconque des revendications précédentes, dans lequel des fibres sont fournies avant l'étape c) et celles-ci sont mélangées, imprégnées, infiltrées ou imbibées avec les matériaux fournis à l'étape a) et à l'étape b).

8. Polymère, monomère ou oligomère réticulé fabriqué ou pouvant être fabriqué avec un procédé selon l'une quelconque des revendications 1 à 6.

9. Matériau composite à base de fibres fabriqué ou pouvant être fabriqué avec un procédé selon la revendication 7.

10. Utilisation d'un polymère, d'un monomère ou d'un oligomère réticulé selon la revendication 8 en tant que matrice recyclable pour un matériau composite à base de fibres selon la revendication 9 ou en tant que polymère, monomère ou oligomère recyclable ou en tant que colle ou en tant que polymère autoréparateur.
